# EUROPÄISCHE PATENTSCHRIFT

(11) **EP 2 529 123 B1**
(45) Veröffentlichungstag und Bekanntmachung des Hinweises auf die Patenterteilung: **19.03.2014**
(21) Anmeldenummer: 11703127.8
(22) Anmeldetag: 27.01.2011
(51) Int. Cl.: F16B 19/06

(54) **VERBINDUNGSELEMENT UND HERSTELLUNGSVERFAHREN FÜR EIN VERBINDUNGSELEMENT**
CONNECTION ELEMENT AND METHOD FOR PRODUCING A CONNECTION ELEMENT
ÉLÉMENT DE LIAISON ET PROCÉDÉ DE FABRICATION D'UN ÉLÉMENT DE LIAISON

(30) Priorität: 27.01.2010 DE 102010006000
(43) Veröffentlichungstag der Anmeldung: 05.12.2012
(73) Patentinhaber: Tox Pressotechnik GmbH & Co. KG, 88250 Weingarten (DE); Nedschroef Altena GmbH, 58762 Altena (DE)
(72) Erfinder: WENDT, Roland, 88260 Argenbühl (DE); BADENT, Michael, 88250 Weingarten (DE); PFEIFFER, Wolfgang, 88677 Markdorf (DE); WENNEHORST, Ewald, 58644 Iserlohn (DE); MUNZ, Karlheinz, 74653 Künzelsau (DE)
(74) Vertreter: Otten, Roth, Dobler & Partner
(86) Internationale Anmeldenummer: PCT/EP2011/000363
(87) Internationale Veröffentlichungsnummer: WO 2011/092014

(56) Entgegenhaltungen:
- WO-A2-2006/047077
- DE-B3- 10 259 369
- US-A- 1 647 062
- US-A- 4 978 270

## Beschreibung

### Stand der Technik:

Die vorliegende Erfindung betrifft ein Verbindungselement gemäß dem Oberbegriff von Anspruch 1. Ein derartiges Verbindungselement ist aus der DE 102 59 369 B3 bekannt.

Im Bereich der Fertigungsverfahren ist das Fügen durch Umformen eine in vielen Anwendungen bevorzugte Technik. Dazu zählt auch das Stanznieten, bei welchem ein Verbindungselement wie beispielsweise ein Halbhohl- oder Vollstanzniet zum punktuellen Verbinden von Bauteilen in diese eingebracht wird, indem z. B. ein Stempel von oben auf das Verbindungselement einwirkt und dieses durch eine stempelseitige Oberseite der zu verbindenden Bauteile drückt und im Zusammenwirken mit einer Matrize die Stanznietverbindung erstellt. Das Stanznieten dient insbesondere zum Verbinden von mehreren Blechlagen, wobei am entstehenden Verbindungspunkt die zu verbindenden Bauteile zuvor nicht gelocht werden.

Ein Vollstanzniet kann über seine Länge in unterschiedliche Abschnitte wie einen Kopfabschnitt, einen Schaftabschnitt und einen Fußabschnitt mit einer Schneidkante unterteilt werden.

Im Hinblick auf unterschiedlichste Verbindungsaufgaben, z. B. abhängig von der Art und Zahl der miteinander zu verbindenden Bauteile und/oder im Hinblick auf eine technisch und wirtschaftlich zu realisierende Herstellung des Verbindungselements sind die bekannten Verbindungselemente noch nicht in allen Punkten ausgereift.

Derzeit werden diese Verbindungselemente aufwändig spanend hergestellt.

### Aufgabe und Vorteile der Erfindung:

Aufgabe der vorliegenden Erfindung ist es, Stanznietverbindungen im Hinblick auf technische und wirtschaftliche Gesichtpunkte zu verbessern. Diese Aufgabe wird durch die unabhängigen Ansprüche gelöst.

In den abhängigen Ansprüchen sind vorteilhafte Weiterbildungen der Erfindung aufgezeigt.

Die Erfindung geht zunächst aus von einem Verbindungselement zur Ausbildung einer Stanznietverbindung von wenigstens zwei Bauteilabschnitten, wobei sich das Verbindungselement über seine Länge in einen Kopfabschnitt, einen Fußabschnitt und einen Schaftabschnitt, der sich zwischen dem Kopfabschnitt und dem Fußabschnitt erstreckt, unterteilt, und der Fußabschnitt an seinem freien Ende einen Fußsockel mit einer zylindrischen oder der Zylinderform zumindest angenäherten Grundform aufweist. Der Schaftabschnitt ist über seine wesentliche Erstreckung ebenfalls zylindrisch oder in einer der Zylinderform nahekommenden Form ausgebildet beispielsweise im Querschnitt leicht elliptisch. Gegebenenfalls kann der Schaftabschnitt außen leicht konisch sein. In der Regel ist das Verbindungselement rotationssymmetrisch zu seiner Längsachse, kann aber auch geringfügig davon abweichen.

Ein wesentlicher Aspekt der Erfindung liegt darin, dass eine ringförmig umlaufende Erhöhung im Fußabschnitt zwischen dem Fußsockel und dem Schaftabschnitt ausgebildet ist. Über die umlaufende Erhöhung im Fußabschnitt können in Längsrichtung des Verbindungselements beidseitig bzw. umfänglich Kräfte aufgenommen werden. Damit kann die mit dem vorgeschlagenen Verbindungselement ausgebildete Stanznietverbindung verbessert werden. Die Länge der Erhöhung selbst ist bezogen auf die Gesamtlänge des Verbindungselements vergleichsweise gering.

Das Verbindungselement wird auch als Vollstanzniet bezeichnet.

Das erfindungsgemäße Verbindungselement zeichnet sich auch dadurch aus, dass es eine relativ hohe Toleranz gegenüber Blechdickenschwankungen besitzt, so dass bei einer betrachteten Länge des Verbindungselements die Dicke der zu verbindenden Bauteilabschnitte stark variieren kann, ohne dass bei der erstellten Verbindung technische Kompromisse hingenommen werden müssen. Außerdem ist es besonders wirtschaftlich, dass ein Verbindungselement mit einem gewählten Längenmaß ohne Abstriche geeignet ist für eine Vielzahl von Bauteilpaarungen, die sich in der Summe der Gesamtdicke der mehreren Bauteilabschnitte unterscheiden.

Die umlaufende Erhöhung kann sich unmittelbar durch einen Materialüberstand zu benachbarten Abschnitten ergeben, die sich über eine wesentliche Länge des Verbindungselements erstrecken und bis an die Erhöhung ohne Materialwegnahme heranreichen und/oder die Erhöhung kann sich durch eine Einschnürung bzw. Vertiefung, die unmittelbar benachbart zur Erhöhung ein- oder beidseitig der Erhöhung vorhanden ist, ergeben.

Erfindungsgemäß weist der Schaftabschnitt einen Durchmesser auf, der geringer als ein Durchmesser des Fußsockels ist. Insbesondere kann der Schaftabschnitt einen größten Außendurchmesser bei elliptischem bzw. polygonalem Querschnitt bzw. einen Zylinderdurchmesser aufweisen, der geringer ist als ein Durchmesser des insbesondere zylindrischen Fußsockels. Damit steht verglichen zu bekannten vergleichbaren Verbindungselementen mehr Raum für Materialbereiche der Bauteilabschnitte zur Verfügung, die beim Stanznietumformprozess fließen und so eine Formveränderung der zu verbindenden Bauteilabschnitte bewirken. Bekannte Verbindungselemente weisen in der Regel einen Schaftabschnitt auf, welcher dem Durchmesser des Fußabschnitts entspricht. Demgegenüber steht erfindungsgemäß dem Material der Bauteilabschnitte mehr Volumen zur Verfügung, was bei bekannten Verbindungselementen von Schaftmaterial ausgefüllt ist.

Das erweiterte Ausweichvolumen wirkt sich insbesondere vorteilhaft dahingehend aus, dass einem stempelseitigen bzw. oberen Bauteilabschnitt, an dem der Fußabschnitt des Verbindungselements beim Stanznieten zuerst in Kontakt kommt, mehr Raum zur Verfügung steht. Damit wird durch zwischen den Bauteilabschnitten wirkende Kräfte in den stanzgenieteten Bauteilabschnitten, wobei die Kräfte zu bisherigen Verbindungen reduziert sind, eine entsprechende Spannung im Bereich der ausgebildeten Stanznietverbindung ebenfalls verringert. So lässt sich insbesondere eine mechanische Belastung auf den Kopfabschnitt reduzieren gegenüber bisherigen Anordnungen, womit es erfindungsgemäß auch zu keinem "Wegplatzen" des Kopfabschnitts mehr kommt, was bisher bei Verwendung von Verbindungselementen z. B. mit im Verhältnis zum Fußsockel nicht verringertem Schaftabschnitt auftreten kann.

Es ist überdies vorteilhaft, dass der Schaftabschnitt über seine Längserstreckung ohne eine Erhöhung ausgebildet ist. Auch dies macht es möglich, dass mehr Raum für ein Nachfließen von umgeformten Bauteilabschnitten im Bereich des Nietschafts zur Verfügung steht. Außerdem ist die Herstellung des unprofilierten Schaftabschnitts einfacher bzw. lässt sich eine vergleichsweise einfache Geometrie des Verbindungselements realisieren. Es hat sich zudem gezeigt, dass trotz nicht vorhandener Erhöhungen, also insbesondere ohne Rillen im Schaft keine schlechtere Verankerung bzw. Abstützung der Bauteilabschnitte bzw. deren gestanzter Ränder an der Außenseite des Verbindungselements im Bereich des Schaftabschnitts zu beobachten ist.

Des Weiteren kann die Zahl von unterschiedlichen Verbindungselementen bezüglich der Rillenzahl im Schaftabschnitt auf eine Form minimiert werden, insbesondere unabhängig wie viel Lagen von Bauteilabschnitten mit dem Vollstanzniet zu verbinden sind.

Weiter ist es vorteilhaft, dass zumindest im Schaftabschnitt ein Bereich derart ausgebildet ist, dass die Rauigkeit des Bereichs gegenüber benachbarten Bereichen erhöht ist. Unter einem Bereich des Schaftabschnitts wird ein Bereich der Außenoberfläche des Schaftabschnitts verstanden. Die benachbarten Bereiche mit glatter Oberfläche bzw. mit geringerer Rauigkeit können im Schaftabschnitt selbst und/oder im anschließenden Kopf- bzw. Fußabschnitt liegen. Insbesondere ist es vorteilhaft, dass der gesamte Schaftabschnitt mit einer erhöhten Rauigkeit gegenüber zum Schaftabschnitt benachbarten Bereichen ausgebildet ist. Bislang ist die gesamte zur Längsachse des Vollstanzniets umfängliche Außenoberfläche des Vollstanzniets mit einer einheitlichen Oberflächenbeschaffenheit versehen bzw. einheitlich vergleichsweise glatt ausgebildet. Es kann aber vorteilhaft sein, wenn die Rauigkeit zumindest von Bereichen des Schaftabschnitts erhöht ist. Die Erhöhung der Rauigkeit bewirkt insbesondere vorteilhafterweise, dass ein stempelseitiger Werkstoff nicht so leicht an der Mantelfläche bzw. der Außenseite des Verbindungselements im Bereich des Schaftabschnitts nach unten fließen kann. Die Erhöhung der Rauigkeit bzw. des damit verbundenen Reibkoeffizienten des betreffenden Oberflächenbereichs kann auf unterschiedlichste Weise eingerichtet sein. Beispielsweise durch eine Anpassung der Oberflächen- bzw. Außenstruktur wie zum Beispiel durch ein eingebrachte Rändelstruktur, eine geringe Welligkeit oder eine noppenartige Oberflächenstruktur und/oder durch einen die Oberfläche aufrauenden Bearbeitungsschritt. Nicht ausgeschlossen ist es, dass die Rauigkeit durch die Wahl des die Oberfläche des betreffenden Bereichs bildenden Materials beeinflusst bzw. bestimmt wird, beispielsweise durch eine Beschichtung und/oder das Vorhandensein von die Rauigkeit verändernden Elementen, beispielsweise aus einem Material, das sich vom Material unterscheidet, aus dem der überwiegende Teil des Schaftabschnitts besteht.

Des Weiteren ist es vorteilhaft, dass der Schaftabschnitt in Längsrichtung des Verbindungselements betrachtet eine von der Zylinderform abweichende Form aufweist. Der Schaftabschnitt kann so ausgestaltet sein, dass sich der Schaftabschnitt zumindest abschnittsweise verjüngt und/oder aufweitet oder auf andere Weise sich von einer zylindrischen Form unterscheidet, wobei die Abweichung von der Zylinderform vergleichsweise gering ausfallen kann. Ein Bereich einer Außenseite des Schaftabschnitts kann beispielsweise relativ zur Längsachse des Verbindungselements um Bruchteile eines Winkelgrades oder um wenige Winkelgrade geneigt sein. Der Schaftabschnitt des Vollstanzniets kann sich zum Fußabschnitt oder zum Kopfabschnitt hin verjüngen oder aufweiten. Die Verjüngung oder Aufweitung kann linear oder entlang einer Kurve erfolgen. Auch eine Kombination daraus in zueinander benachbarten Bereichen des Schaftabschnitts ist denkbar. Die geringe Formabweichung des Schaftabschnitts von einer Zylinderform z. B. bei einem kegelförmigen bzw. rundkegelförmigem Schaftabschnitt kann bei der Ausbildung einer Stanznietverbindung mit einem entsprechenden Verbindungselement zur Verbindung von wenigstens zwei Bauteilabschnitten aufgrund einer verbesserten Verankerung der Bauteilabschnitte am Schaftabschnitt vorteilhaft sein.

Außerdem ist es vorteilhaft, dass die umlaufende Erhöhung einen Außendurchmesser aufweist, welcher geringfügig kleiner ist, als ein Durchmesser des Fußsockels.

Die umlaufende Erhöhung weist also an ihrem radial zur Längsachse des Verbindungselements äußersten Punkt einen Durchmesser auf, welcher geringfügig kleiner ist, als ein Durchmesser des Fußsockels insbesondere kleiner als ein Durchmesser einer Schneidkante des Fußsockels. Die umlaufende Erhöhung kann z. B. einen Außendurchmesser aufweisen, der ca. 0,1 mm geringer ist als der Außendurchmesser des Fußsockels. Damit wird vorteilhafterweise die Erhöhung im Hinblick auf mögliche mechanische Beschädigungen beim Durchdrücken des Verbindungselements durch die zu verbindenden Bauteilabschnitt geschützt. Der mit dem Durchmesser des Fußsockels durchlochte Bauteilabschnitt weist damit ein Loch mit einem Innendurchmesser auf, der geringfügig größer ist, als der Außendurchmesser der Erhöhung, die nachfolgend mit dem Eindrücken des Verbindungselements an dem Rand des Lochs vorbeibewegt wird, aber nicht in Kontakt kommt.

Besonders beim Stanznieten von ultra-hochfesten Materialien können andernfalls Ränder eines durchstanzten Loches, wenn sie mit der Erhöhung in Kontakt kommen, zu Beschädigungen an der Erhöhung führen, was nachteilig ist.

Eine weitere vorteilhafte Ausführungsform des Erfindungsgegenstandes zeichnet sich dadurch aus, dass in einem Bereich, in welchem der Schaftabschnitt in den Fußabschnitt übergeht, eine umlaufende Einschnürung vorhanden ist. Die Einschnürung ist insbesondere unmittelbar vor der umlaufenden Erhöhung im Fußabschnitt. Diese Einschnürung kann insbesondere konkav und sehr sanft bzw. flach geneigte Flanken aufweisen. Der Durchmesser im Grund der Einschnürung kann beispielsweise nur um wenige Prozent geringer sein, z. B. 3 % geringer, als der im Schaftabschnitt über dessen wesentliche Erstreckung vorhandene Durchmesser des Schaftabschnitts.

Die Einschnürung bzw. Taillierung unmittelbar vor der umlaufenden Erhöhung kann die dortige Verankerung für umgeformtes Material der Bauteilabschnitte von der Seite des Schaftabschnitts her verbessern, insbesondere im Zusammenwirken mit der benachbarten umlaufenden Erhöhung.

Erfindungsgemäß ist genau eine ringförmige Erhöhung am Fußabschnitt vorhanden. Dies ist im Hinblick auf eine einfache Geometrie und eine wirtschaftliche Herstellung des Verbindungselements vorteilhaft. Es hat sich herausgestellt, dass mit genau einer umlaufenden Erhöhung ein optimaler Zustand im Hinblick auf sämtliche relevanten Bewertungsgrößen erreicht wird.

Besonders vorteilhaft ist es, dass die umlaufende Erhöhung über konkav geformte Bereiche in benachbarte Abschnitte übergeht. Damit ist ein Nachfließen von Material der Bauteilabschnitte in diese Bereiche besonders gut möglich. Ein Ausfüllen mit verformtem Material von Bereichen außen an der

Erhöhung bzw. ein Nachfließen des umgeformten Materials bis an sämtliche Oberflächen der Erhöhung und benachbarter Bereiche ist so besonders vorteilhaft möglich. Außerdem können mit den konkav geformten Bereichen absatzlose Übergänge von Außenabschnitten des Verbindungselements geschaffen werden. Vorteilhafterweise wird so das Verbindungselement nahezu vollständig außen von umgeformtem Material der zu verbindenden Bauteilabschnitte kontaktierend umschlossen.

Ein weiterer Vorteil ist auch darin zu sehen, dass mit den konkav geformten Bereichen an der umlaufenden Erhöhung bzw. durch die damit vorhandenen gerundeten Übergänge eine andernfalls erhöhte Kerbwirkung reduziert wird.

Des Weiteren wird vorgeschlagen, dass im Fußabschnitt eine umlaufende Vertiefung zwischen dem Fußsockel und der umlaufenden Erhöhung ausgestaltet ist. Insbesondere ist genau eine solche umlaufende Vertiefung vorhanden. Dies ermöglicht insbesondere ein Nachfließen eines matrizenseitigen Materials des unteren matrizenseitigen Bauteilabschnittes der zu verbindenden Bauteilabschnitte.

Der Grund der betreffenden umlaufenden Vertiefung, also ein zur Längsachse radial nächster Punkt der Vertiefung, weist insbesondere im Wesentlichen einen dem Durchmesser des Schaftabschnitts entsprechenden Durchmesser auf. Dies ist im Hinblick auf Stabilitätsgründen des Verbindungselements vorteilhaft.

Weiter ist es vorteilhaft, dass der Kopfabschnitt an seinem freien Ende einen Kopfsockel mit einer zylindrischen oder der Zylinderform zumindest angenäherten Grundform aufweist. Dies erhöht die Stabilität des Kopfabschnitts insbesondere gegen ein Abreißen in der erstellten Stanznietverbindung.

Durch die Vielzahl der in gewissen Grenzen anpassbaren Geometrieeigenschaften des Verbindungselements wie oben dargelegt, kann eine für eine betreffende Anwendung jeweils optimale Form des Verbindungselements eingerichtet werden. Dabei sind jedoch die vorgenannt erläuterten grundlegenden Vorgaben einzuhalten.

In Einzelfällen kann das erfindungsgemäße Verbindungselement durch eine optimierte Anpassung gegenüber bekannten bzw. vergleichbaren Vollstanznieten, bezogen auf den Stanzdurchmesser eine um bis zu 25 % höhere Stanzkraft ermöglichen. Dies ist insbesondere anhand der Finite-Elemente-Methode, einem Verfahren der numerischen Mathematik, nachgewiesen worden.

Weiter wird vorgeschlagen, dass im Kopfabschnitt ein konkav ausgebildeter Bereich ausgebildet ist, der zwischen dem Kopfsockel und dem Schaftabschnitt angeordnet ist. Insbesondere ist ein mit einem Radius ausgebildeter Übergangsbereich vorteilhaft. Bevorzugt ist die konkave Form als Hohlkehle ausgebildet. Die Konkavität ist insbesondere von dem unteren Rand des Kopfsockels bis zum zylindrischen Bereich des Schaftabschnitts durchgängig bzw. gleichartig ausgebildet. Der Übergang vom konkaven Bereich zum Schaftabschnitt ist insbesondere absatzlos bzw. bündig an der Außenkontur des Verbindungselements realisiert. Vorteilhafterweise ist der gesamte Abschnitt zwischen dem unteren Rand des Kopfsockels und dem Schaftabschnitt durch den konkaven Bereich gebildet.

Weiter ist es vorteilhaft, dass im Kopfabschnitt zwischen dem Kopfsockel und dem Schaftabschnitt ein konischer Bereich ausgebildet ist. Je nach Anwendungsfall kann ein schräger Verlauf bzw. eine Fase zwischen Kopfsockel und Schaftabschnitt vorteilhaft sein, insbesondere im Hinblick auf eine vereinfachte Herstellung des Verbindungselements.

Im Vergleich zwischen konischem Übergang und konkavem Übergang zwischen Kopfsockel und Schaftabschnitt zeigt ein konkaver Übergang einen wesentlichen Unterschied, der in einer Reihe von Anwendungen vorteilhaft ist. Insbesondere wird bei einer eingerichteten Stanznietverbindung mit dem konkaven Bereich eine deutliche reduzierte Biege-Spannung im oberen zu verbindenden Bauteilabschnitt erreicht. Denn durch den zu einem konischen Bereich vergleichsweise größeren Raum für den oberen Bauteilabschnitt also eine z. B. obere Blechlage, wird dieser weniger stark nach unten gestaucht, womit eine verringerte Zugspannung auf den Kopfsockel bzw. geringere Kraft von unten gegen den Kopfsockel wirkt. Dieser Effekt lässt sich insbesondere bei oberen bzw. stempelseitigen Bauteilabschnitten aus einem sehr steifen bzw. ultra-hochfesten Material, beispielsweise aus einem ultra-hochfesten Stahlblech beobachten. Mit dem vorgeschlagenen Vollstanzniet kann eine Beeinträchtigung der Verbindung durch ein entsprechendes Abreißen des Kopfsockels ausgeschlossen werden.

Auch hier wird mit dem konkaven Bereich eine Reduzierung der Kerbwirkung bzw. des Kerbfaktors gegenüber anderen Übergängen z. B. absatzartigen oder konischen Übergängen erreicht.

Bisher kommt ein Abreißen des Kopfsockels bzw. des Kopfabschnitts bei konisch verlaufenden Übergängen regelmäßig vor, wozu auch die mit der konischen Form einhergehende Kerbwirkung am Übergang des konischen Abschnitts zu benachbarten Abschnitten beiträgt.

Mit dem konkaven Übergang kann außerdem durch die gerundete Form ein optimierter Materialfluss des oberen Bauteilabschnitts in die Konkavität erreicht werden.

Bei einer bevorzugten Ausführungsform eines erfindungsgemäßen Verbindungselements ist es vorteilhaft, dass bezogen auf die Gesamtlänge des Verbindungselements die relative Längenabmessung des Kopfabschnitts mit Kopfsockel und Hohlkehle ca. 20 bis 30 % beträgt, des Schaftabschnitts ca. 40 bis 60 % und des Fußabschnitts ca. 30 bis 40 % beträgt. Dies hat sich mit ausgesuchten Vollstanznieten in praxisrelevanten Anordnungen zur Ausbildung einer Stanznietverbindung gezeigt.

Es ist überdies vorteilhaft, dass bezogen auf den Durchmesser des zylindrischen Schaftabschnitts der Durchmesser des Fußsockels größer ist. Der Fußsockeldurchmesser kann z. B. um ca. 10 bis 20 % größer sein. So steht im Schaftabschnitt für beim Stanznieten umgeformtes Material mehr bzw. ein vergrößerter Raum zum Nachfließen zur Verfügung, im Vergleich mit einem Verbindungselement mit Durchmessergleichheit von Schaft und Fußsockel.

Gemäß einer vorteilhaften Variante der Erfindung ist die Verbindungselementform nicht rotationssymmetrisch. So lässt sich eine Vielzahl gewünschter bzw. individueller Geometrien des Verbindungselements bereitstellen.

Besonders bevorzugt ist eine polygonale Querschnittsform des Verbindungselements.

Schließlich ist es auch vorteilhaft, wenn der Nietkopf einen zusätzlichen Funktionsbereich wie beispielsweise einen Bolzen oder ein Gewinde aufweist, welcher in einer ausgebildeten Stanznietverbindung von wenigstens einem Bauteilabschnitt über eine Oberseite eines oberen Bauteilabschnitts überstehen kann. So kann an dem Verbindungselement eine zusätzliche Funktionalität vorgesehen werden, welche bereits bei der Herstellung des Verbindungselements berücksichtigt ist bzw. am noch nicht einsatzgemäß verwendeten Verbindungselement vorbereitet ist.

Die Erfindung bezieht sich außerdem auf ein Verfahren zur Herstellung eines Verbindungselements gemäß einer der oben beschriebenen Ausgestaltungen. Erfindungsgemäß wird das Verbindungselement mit einem Massivumformungsprozess aus einem Materialrohling hergestellt, wobei der Materialrohling in einem Werkzeug mit mehreren den Materialrohling seitlich umgreifenden Segmenten eingespannt und in einem Umformprozess stauchend verformt wird. So lässt sich wirtschaftlich und technisch vorteilhaft ein definiert vorgegebenes Verbindungselement gemäß einer der oben genannten erfindungsgemäßen Ausgestaltungen ausbilden.

Gegebenenfalls kann abhängig vom Werkstoff bzw. vom Umformgrad für eine optimierte Prozessführung der Materialrohling erwärmt werden.

Bedingt durch den vorgeschlagenen Fertigungsprozess sind auch nicht-rotationssymmetrische Formen des Verbindungselements ohne Weiteres möglich, z. B. noppenartige Ausprägungen, elliptische, polygone Querschnitte und/oder erhabene bzw. vertiefte Strukturen an der Außenseite des Verbindungselements. Sämtliche Abmessungen sind in einem frei wählbaren Bereich ausbildbar.

Denkbar ist auch, dass sich die Form des Verbindungselements entlang der Längs- bzw. Nietachse ändert. Beispielsweise kann die Schneidkante eine runde Form haben bzw. das Verbindungselement an seinem fußseitigen Ende eine kreisförmige Querschnittsfläche aufweisen, wobei die Form entlang der Längsachse des Verbindungselements in eine polygonale Form übergeht. Der Vorteil ist eine damit realisierte Verdrehsicherung des Verbindungselements bei der erstellten Nietverbindung.

Spitze Ringe bzw. Erhöhungen und spitze Vertiefungen bzw. Rillen außen an dem Verbindungselement sind mit dem vorgeschlagenen Verfahren nur bedingt ausbildbar. Spitze Rillen können einen Materialfluss bei der Herstellung einer Stanznietverbindung ohnehin ggf. hemmen.

Folgende Kopfformen des Verbindungselement sind z. B. herstellbar: Flachkopf, Kegelstumpfkopf, Vertiefung oder Erhebung auf der Planfläche des Nietkopfes als Führungs- oder Zentrierhilfe oder Funktionsanprägung wie z. B. Bolzen oder Gewinde.

Auch im Hinblick auf den Nietschaft kann dieser für unterschiedliche Verbindungselement-Typen mit einer individuellen Geometrie bzw. Oberflächenbeschaffenheit versehen werden, um z. B. lokal eine höhere Reibung zu benachbarten Bereichen der zu verbindenden Bauteile zu erzeugen.

Vertiefungen wie beispielsweise Rillen oder dergleichen sind im Hinblick auf die Geometrie der Rille bzw. einen ggf. benachbarten Ring, eine Taillierung, einen Absatz anpassbar, beispielsweise ein Ein- und Auslaufwinkel oder nicht rotationssymmetrische Vertiefungen bzw. Verrundungen.

Mit dem Herstellungsverfahren lässt es sich auch einrichten, dass der Fußabschnitt bzw. der Fußsockel zur Unterkante, welche eine Schneidkante bildet, sich konisch erweitert. Auch sind Vertiefungen auf der stirnseitigen Planfläche des Fußabschnitts als Führungshilfe bei der Fertigung einbringbar.

Je nach Art des Mehrsegmentwerkzeugs bzw. je nach Anzahl der Segmente bildet sich bei der Herstellung längs auf der Oberfläche des Verbindungselementes von der Oberkante bis zur Unterkante ein charakteristischer Grat entlang jeder Werkzeug- bzw. Segmenttrennstelle. Die Grate können bewusst so ausgebildet werden, dass ein erhöhter Grat entsteht, wodurch eine vorteilhafte Verdrehsicherung des mit diesem Verbindungselement gebildeten Verbindungspunktes verbessert wird.

### Figurenbeschreibung

Weitere Vorteile und Merkmale der Erfindung sind anhand der in den Figuren gezeigten Ausführungsbeispiele der Erfindung näher erläutert.

Im Einzelnen zeigt:
- Figur 1:: eine bevorzugte Ausführungsform eines erfindungsgemäßen Vollstanzniets von der Seite,
- Figur 2:: im Schnitt einen stark schematisierten Teil einer Anordnung zum Herstellen eines Vollstanzniets gemäß Figur 1,
- Figuren 3 bis 10:: weitere Ausführungsvarianten von erfindungsgemäßen Vollstanznieten in Seitenansicht und
- Figur 11:: eine Schnittansicht durch einen Bereich einer Vollstanznietverbindung mit einem erfindungsgemäßen Vollstanzniet an drei miteinander erfindungsgemäß verbundenen Blechen.

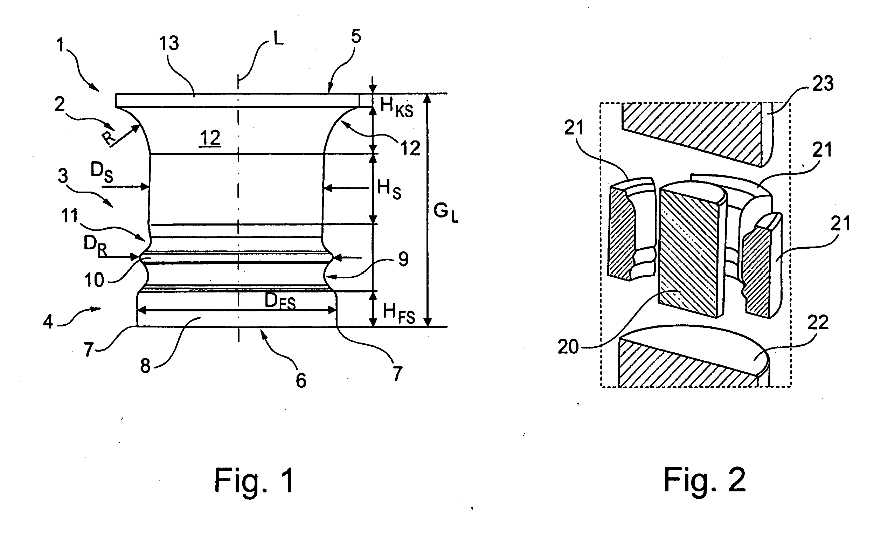

Figur 1 zeigt von der Seite ein als Vollstanzniet 1 ausgebildetes erfindungsgemäßes Verbindungselement in zur Längsachse L des Vollstanzniets 1 rotationssymmetrischer Form. Der Vollstanzniet 1 ist ausgebildet, zwei oder mehr Bauteilabschnitte, insbesondere Blechbauteile im Stanznietverfahren zu verbinden. Der Vollstanzniet 1 umfasst über seine Länge entlang der Längsachse L verschiedene Abschnitte wie einen Nietkopf 2, einen Nietschaft 3 und einen Nietfuß 4. Auf einer Oberseite 5 kann bei der Herstellung einer Stanznietverbindung ein Stempel einwirken.

Der Oberseite 5 gegenüberliegend ist eine Unterseite 6 vorhanden, welche zu Beginn des Vollstanznietens beispielsweise auf einer oben liegenden Blechlage aufsitzt. Die Unterseite 6 wird außen von einer rundum verlaufenden Schneidkante 7 begrenzt und begrenzt selbst stirnseitig einen Fußsockel 8, der zylindrisch geformt ist und in Richtung der Längsachse L eine Höhe H_{FS} aufweist. Die umlaufende Schneidkante 7 dient insbesondere zum sauberen Festlegen eines Lochdurchmessers eines beim Stanznieten durchgestanzten Loches in der oberen Blechlage, beispielsweise von drei zu verbindenden Blechlagen, was in Figur 13 noch näher erläutert ist.

Der Fußsockel 8 ist hier zylindrisch ausgebildet, kann jedoch auch eine der zylindrischen Grundform angenäherte Form aufweisen, beispielsweise im Querschnitt leicht elliptisch oder leicht konisch sein. An den Fußsockel 8 schließt sich eine geschlossen umlaufende, hauptsächlich konkav ausgebildete Rille 9 an. In die Rille 9 kann beim Vollstanznieten verformtes Material einer unteren Blechlage der zu verbindenden Blechlagen, die sich unterseitig auf einer Matrize abstützt, fließen. Den oberen Abschluss des Nietfußes 4 bildet ein umlaufend ausgebildeter und außen verrundeter Ring 10, dessen Durchmesser D_{R} geringfügig kleiner ist als ein Durchmesser D_{FS} des Fußsockels 8.

Die nachfolgend erwähnten relativen Größenangaben betreffen den beispielhaft gezeigten Vollstanzniet 1, wobei bei anderen erfindungsgemäßen Vollstanznieten andere Größenverhältnisse herrschen können.

An den Nietfuß 4 schließt sich über eine leichte bzw. nur wenig nach unten abgesenkte Einschnürung 11 bzw. Taillierung der Nietschaft 3 an. Der Nietschaft 3 ist hier vollständig zylindrisch ausgeführt und weist einen Durchmesser Ds auf, welcher um ca. 10 % kleiner als der Durchmesser D_{FS} des Fußsockels 8 ist. Die Höhe H_{S} des zylindrischen Nietschafts 3 macht zur Gesamtlänge G_{L} etwa 30 % aus. Durch den Übergang bzw. den Durchmessersprung vom Ring 10 zum Nietschaft 3 wird ein Absatz ausgebildet, an dem sich verformtes Material der mit einander zu verbindenden Bauteilabschnitte schaftseitig abstützen kann. Der Durchmesser im Rillengrund der Rille 9 entspricht in etwa dem Durchmesser D_{S} des Nietschafts 3.

Nach oben schließt sich an den Nietschaft 3 der Nietkopf 2 an, der sich über eine Hohlkehle 12 vom Nietschaft 3 mit einem Radius R konkav aufweitet und sich bis zu einem Kopfsockel 13 erstreckt, der eine Höhe H_{KS} aufweist, die etwa nur ein Drittel der Höhe H_{FS} des Fußsockels beträgt. Der Kopfsockel 13 ist wie der Fußsockel 8 zylindrisch ausgebildet. Der Kopfsockel 13 wird stirnseitig durch eine obere Planfläche bzw. die Oberseite 5 begrenzt. Mit der Hohlkehle 12 wird ein absatzloser Bereich zwischen dem Kopfsockel 13 und dem Nietschaft 3 realisiert.

Mit dem dargestellten Vollstanzniet 1 gemäß Figur 1 wird gegenüber bisher eingesetzten Vollstanznieten mit gleicher Gesamtlänge G_{L} eine hohe Toleranz gegenüber Blech- bzw. Bauteildickenschwankungen erreicht. Das heißt die Gesamtdicke der zu verbindenden Bauteilabschnitte bzw. der Blechlagen können vergleichsweise weit variieren. Die in Stanzrichtung betrachtete Gesamtdicke der mehreren miteinander zu verbindenden Blechlagen kann, bezogen auf eine Gesamtlänge G_{L} des Vollstanzniets 1 von zum Beispiel 4,5 mm, im Bereich zwischen 100 % der Gesamtlänge G_{L} und beispielsweise 66 % der Gesamtlänge G_{L} betragen, es können also Bleche mit Gesamtblechdicken z.B. zwischen 4,5 mm und ca. 3,0 mm vorteilhaft stanzgenietet verbunden werden.

Außerdem ist es vorteilhaft, dass mit der Hohlkehle 12 gegenüber konischen Nietköpfen eine reduzierte Zugvorspannung im Nietkopf 2 von der Hohlkehle 12 in Richtung zum Kopfsockel 13 wirkt, was insbesondere einem Abplatzen des Nietkopfes 2 entgegenwirkt. Denn aufgrund der Hohlkehle 12 bzw. deren absatzfreier Übergang zum Nietschaft 3 wird eine obere Blechlage im Verbindungspunkt weniger stark nach unten verbogen bzw. unter den Kopfsockel 13 gezogen, so dass die Zugspannung auf den Kopfsockel 13 reduzierbar ist.

Des Weiteren ist es vorteilhaft, dass in die Einschnürung 11 leicht verformtes Material einfließen kann.

Schließlich ist es weiterhin vorteilhaft, dass für die Blechmaterialverformung beim Verbinden ein optimierter Materialfluss von Material der miteinander zu verbindenden Bauteilabschnitte realisiert ist, insbesondere was ein Einlaufen von Material in die Rille 9 bzw. in die Einschnürung 11 angeht.

Figur 2 zeigt stark schematisch grundlegende Zusammenhänge einer Herstellung des Vollstanzniets 1 gemäß Figur 1. Dabei wird ein Materialrohling 20 relativ zu Werkzeugsegmenten 21, einem Stempel 23 und einer Matrize 22 positioniert und nachfolgend bei geschlossenen Werkzeugsegmenten 21 massiv umgeformt.

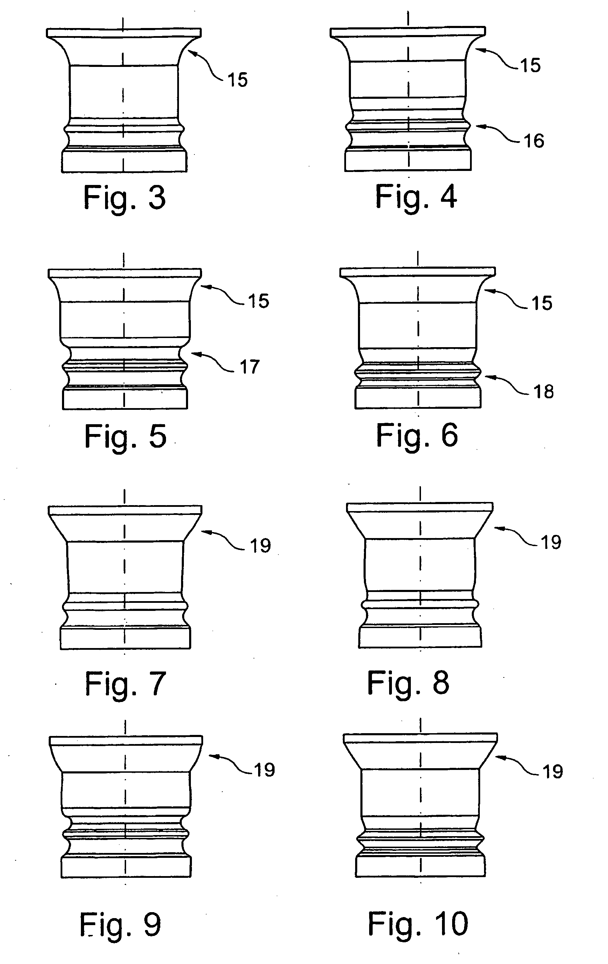

In den Figuren 3 bis 6 sind unterschiedliche weitere erfindungsgemäße Vollstanznieten mit konkaver Hohlkehle 15 gemäß dem Vollstanzniet aus Figur 1 in Seitenansicht gezeigt, wobei sich Details von der Ausführungsform gemäß Figur 1 unterscheiden. Figur 3 zeigt z. B. eine Anordnung ohne Einschnürung 11, Figur 4 einen verbreiterten Ring 16, Figur 5 eine stärkere Einschnürung 17 und Figur 6 schräge Flanken eines Rings 18 bzw. benachbarter Bereiche.

Figur 7 bis Figur 10 zeigt Ausführungsbeispiele erfindungsgemäßer Vollstanzniete gemäß der Figuren 3 bis 6 jedoch mit einem kegelstumpfförmigen Bereich 19 anstelle der Hohlkehle 15.

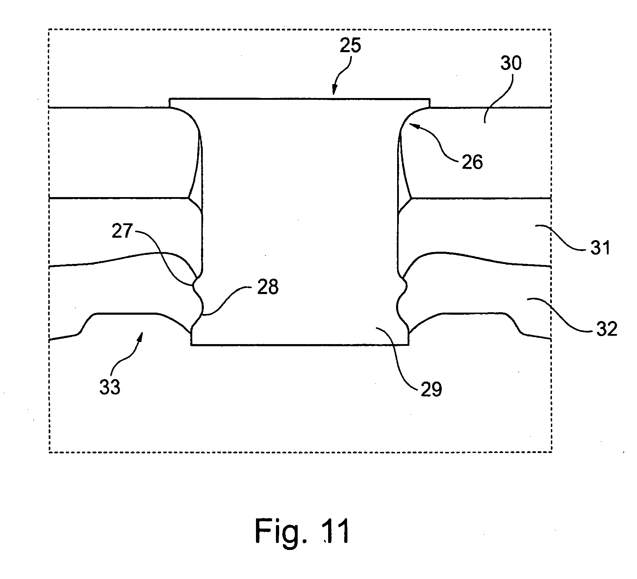

Figur 11 zeigt einen Schnitt durch eine fertig gestellte Vollstanznietverbindung mit einem Vollstanzniet 25, der entsprechend dem Vollstanzniet 1 insbesondere mit einer Hohlkehle 26 geformt ist, und drei miteinander verbundenen Blechen 30, 31 und 32. Gut erkennbar ist, dass das obere Blech 30, das aus einem ultra-hochfesten Material besteht, nicht oder kaum erkennbar nach unten gebogen ist, da durch die Hohlkehle 26 ausreichend Raum für das Blech 30 zur Verfügung steht.

Ein Ring 27 dient zum Abstützen der mittleren und unteren Bleche 31 und 32. Eine Rille 28 ist mit der unteren Blechlage 32 gefüllt. Außerdem ist unterseitig am Blech konzentrisch zum Vollstanzniet 25 eine geschlossene Ringnut 33 benachbart zum Fußsockel 29 vorhanden, die matrizenseitig eingebracht ist, um die Verankerung des unteren Blechs 32 über die Rille 28 zu verbessern.

### Bezugszeichenliste:

- 1: Vollstanzniet
- 2: Nietkopf
- 3: Nietschaft
- 4: Nietfuß
- 5: Oberseite
- 6: Unterseite
- 7: Schneidkante
- 8: Fußsockel
- 9: Rille
- 10: Ring
- 11: Einschnürung
- 12: Hohlkehle
- 13: Kopfsockel
- 14: Bereich
- 15: Hohlkehle
- 16: Ring
- 17: Einschnürung
- 18: Ring
- 19: Bereich
- 20: Drahtabschnitt
- 21: Werkzeugsegment
- 22: Matrize
- 23: Stempel
- 24: -
- 25: Vollstanzniet
- 26: Hohlkehle
- 27: Ring
- 28: Rille
- 29: Fußsockel
- 30: Blech
- 31: Blech
- 32: Blech
- 33: Ringnut

## Patentansprüche

1. Verbindungselement zur Ausbildung einer Stanznietverbindung von wenigstens zwei Bauteilabschnitten (30-32), wobei sich das Verbindungselement über seine Länge in einen Kopfabschnitt (2), einen Fußabschnitt (4) und einen Schaftabschnitt (3), der sich zwischen dem Kopfabschnitt (2) und dem Fußabschnitt (4) erstreckt, unterteilt, und der Fußabschnitt (4) an seinem freien Ende einen Fußsockel (8) mit einer zylindrischen oder der Zylinderform zumindest angenäherten Grundform aufweist, wobei eine ringförmig umlaufende Erhöhung (10; 16; 18; 27) im Fußabschnitt (4) zwischen dem Fußsockel (8; 29) und dem Schaftabschnitt (3) ausgebildet ist, wobei der Schaftabschnitt (3) über seine wesentliche Erstreckung zylindrisch oder in einer der zylinderform nahekommenden form ausgebildet ist und genau eine ringförmig umlaufende Erhöhung (10; 16; 18; 27) im Fußabschnitt (4) vorhanden ist, **dadurch gekennzeichnet, dass** der Schaftabschnitt (3) einen Durchmesser aufweist, der geringer als ein Durchmesser des Fußsockels (8) ist.

2. Verbindungselement nach Anspruch 1, **dadurch gekennzeichnet, dass** der Schaftabschnitt (3) über seine Längserstreckung ohne eine Erhöhung ausgebildet ist.

3. Verbindungselement nach Anspruch 1 oder 2, **dadurch gekennzeichnet, dass** zumindest im Schaftabschnitt ein Bereich derart ausgebildet ist, dass die Rauigkeit des Bereichs gegenüber benachbarten Bereichen erhöht ist.

4. Verbindungselement nach einem der vorhergehenden Ansprüche, **dadurch gekennzeichnet, dass** der Schaftabschnitt in Längsrichtung des Verbindungselements betrachtet eine von der Zylinderform abweichende Form aufweist.

5. Verbindungselement nach einem der vorhergehenden Ansprüche, **dadurch gekennzeichnet, dass** die umlaufende Erhöhung (10; 16; 18; 27) einen Außendurchmesser aufweist, welcher geringfügig kleiner ist, als ein Durchmesser des Fußsockels (8; 29).

6. Verbindungselement nach einem der vorhergehenden Ansprüche, **dadurch gekennzeichnet, dass** in einem Bereich, in welchem der Schaftabschnitt (3) in den Fußabschnitt (4) übergeht, eine umlaufende Einschnürung (11; 17) vorhanden ist.

7. Verbindungselement nach einem der vorhergehenden Ansprüche, **dadurch gekennzeichnet, dass** die umlaufende Erhöhung (10; 16; 27) über im Wesentlichen konkav geformte Bereiche (9, 11; 17; 28) in benachbarte Abschnitte übergeht.

8. Verbindungselement nach einem der vorhergehenden Ansprüche, **dadurch gekennzeichnet, dass** im Fußabschnitt (4) eine,umlaufende Vertiefung (9; 28) zwischen dem Fußsockel (4; 29) und der umlaufenden Erhöhung (10; 16; 18; 27) ausgestaltet ist.

9. Verbindungselement nach einem der vorhergehenden Ansprüche, **dadurch gekennzeichnet, dass** der Kopfabschnitt (2) an seinem freien Ende einen Kopfsockel (13) mit einer zylindrischen oder der Zylinderform zumindest angenäherten Grundform aufweist.

10. Verbindungselement nach einem der vorhergehenden Ansprüche, **dadurch gekennzeichnet, dass** im Kopfabschnitt (2) ein konkav ausgebildeter Bereich (12; 15; 26) ausgebildet ist, der zwischen dem Kopfsockel (13) und dem Schaftabschnitt (3) angeordnet ist.

11. Verbindungselement nach einem der vorhergehenden Ansprüche, **dadurch gekennzeichnet, dass** in Kopfabschnitt zwischen dem Kopfsockel und dem Schaftabschnitt ein konischer Bereich ausgebildet ist.

12. Verbindungselement nach einem der vorhergehenden Ansprüche, **dadurch gekennzeichnet, dass** die Verbindungselementform nicht rotationssymmetrisch ist.

13. Verbindungselement nach einem der vorhergehenden Ansprüche, **dadurch gekennzeichnet, dass** die Querschnittsform des Verbindungselements polygonal ist.

14. Verbindungselement nach einem der vorhergehenden Ansprüche, **dadurch gekennzeichnet, dass** die Querschnittsform beginnend von einem kreisförmigen Querschnitt im Bereich einer Schneidkante am freien Ende des Fußsockels sich in eine polygonale Querschnittsform entlang einer Längsachse des Verbindungselements ändert.

15. Verbindungselement nach einem der vorhergehenden Ansprüche, **dadurch gekennzeichnet, dass** der Nietkopf einen zusätzlichen Funktionsbereich wie beispielsweise einen Bolzen oder ein Gewinde aufweist, welcher in einer ausgebildeten Stanznietverbindung von wenigstens einem Bauteilabschnitt über eine Oberseite eines oberen Bauteilabschnitts übestehen kann.

16. Verfahren zur Herstellung eines Verbindungselements gemäß der vorhergehenden Ansprüche, **dadurch gekennzeichnet, dass** das Verbindungselement mit einem Massivumformungsprozess aus einem Materialrohling (20) hergestellt wird, wobei der Materialrohling (20) in einem Werkzeug mit mehreren den Materialrohling (20) seitlich umgreifenden Segmenten (21) eingespannt und in einem Umformprozess stauchend verformt wird.

## Claims

1. Connection element for forming a punch rivet connection of at least two component portions (30 to 32), wherein the connection element is divided over its length into a head portion (2), a foot portion (4) and a shaft portion (3), which extends between the head portion (2) and the foot portion (4), and the foot portion (4), at its free end, has a foot base (8) with a basic shape which is cylindrical or at least approximately cylindrical, wherein an annular peripheral elevation (10; 16; 18; 27) is formed in the foot portion (4) between the foot base (8; 29) and the shaft portion (3), wherein the shaft portion (3) is cylindrical or close to cylindrical in shape over its essential extent and precisely one annular peripheral elevation (10; 16; 18; 27) is present in the foot portion (4), **characterised in that** the shaft portion (3) has a diameter which is smaller than a diameter of the foot base (8).

2. Connection element according to claim 1, **characterised in that** the shaft portion (3) is formed without an elevation over its longitudinal extent.

3. Connection element according to claim 1 or 2, **characterised in that**, at least in the shaft portion, a region is formed in such a way that the roughness of the region is increased relative to adjacent regions.

4. Connection element according to any one of the preceding claims, **characterised in that** the shaft portion, viewed in the longitudinal direction of the connection element, has a shape that deviates from the cylindrical shape.

5. Connection element according to any one of the preceding claims, **characterised in that** the peripheral elevation (10; 16; 18; 27) has an external diameter which is slightly smaller than a diameter of the foot base (8; 29).

6. Connection element according to any one of the preceding claims, **characterised in that** in a region, in which the shaft portion (3) passes into the foot portion (4), a peripheral constriction (11; 17) is present.

7. Connection element according to any one of the preceding claims, **characterised in that** the peripheral elevation (10; 16; 27) passes into adjacent portions over substantially concavely shaped regions (9, 11; 17; 28).

8. Connection element according to any one of the preceding claims, **characterised in that** a peripheral depression (9; 28) is formed between the foot base (4; 29) and the peripheral elevation (10; 16; 18; 27) in the foot portion (4).

9. Connection element according to any one of the preceding claims, **characterised in that** the head portion (2), at its free end, has a head base (13) with a basic shape which is cylindrical or at least approximately cylindrical.

10. Connection element according to any one of the preceding claims, **characterised in that** a concavely formed region (12; 15; 26), which is arranged between the head base (13) and the shaft portion (3), is formed in the head portion (2).

11. Connection element according to any one of the preceding claims, **characterised in that** a conical region is formed in the head portion between the head base and the shaft portion.

12. Connection element according to any one of the preceding claims, **characterised in that** the shape of the connection element is not rotationally symmetrical.

13. Connection element according to any one of the preceding claims, **characterised in that** the cross sectional shape of the connection element is polygonal.

14. Connection element according to any one of the preceding claims, **characterised in that** the cross sectional shape changes, starting from a circular cross section in the region of a cutting edge at the free end of the foot base, into a polygonal cross sectional shape along a longitudinal axis of the connection element.

15. Connection element according to any one of the preceding claims, **characterised in that** the rivet head has an additional functional region, such as, for example, a bolt or a thread, which, in a formed punch rivet connection, can protrude from at least one component portion over an upper side of an upper component portion.

16. Method for producing a connection element according to any one of the preceding claims, **characterised in that** the connection element is produced from a material blank (20) by a solid shaping process, the material blank (20) being clamped in a tool with a plurality of segments (21) engaging laterally around the material blank (20) and being shaped compressively in a shaping process.

## Revendications

1. Élément de liaison pour réaliser une liaison par rivetage poinçonnant d'au moins deux parties d'éléments de construction (30-32), l'élément de liaison se divisant sur sa longueur en une section de tête (2), une section de pied (4) et une section en forme de fût (3) qui s'étend entre la section de tête (2) et la section de pied (4), et la section de pied (4) étant munie à son extrémité libre d'un socle de pied (8) ayant une forme générale cylindrique ou s'approchant au moins de la forme d'un cylindre, une protubérance circonférentielle annulaire (10 ; 16 ; 18 ; 27) étant réalisée dans la section de pied (4) entre le socle de pied (8 ; 29) et la section en forme de fût (3), la section en forme de fût (3), sur son étendue principale, étant de forme cylindrique ou d'une forme s'approchant de la forme d'un cylindre et exactement une protubérance circonférentielle annulaire (10 ; 16 ; 18 ; 27) étant présent dans la section de pied (4), **caractérisé en ce que** le diamètre de la section en forme de fût (3) est inférieur au diamètre du socle de pied (8).

2. Élément de liaison selon la revendication 1, **caractérisé en ce que** la section en forme de fût (3) est formée sans protubérance sur son étendue longitudinale.

3. Élément de liaison selon la revendication 1 ou 2, **caractérisé en ce qu**'une zone est réalisée au moins dans la section en forme de fût de et dont la rugosité est plus élevée que celle des zones avoisinantes.

4. Élément de liaison selon l'une des revendications précédentes, **caractérisé en ce que** la section en forme de fût, considérée dans la direction longitudinale de l'élément de liaison, présente une forme s'écartant de la forme d'un cylindre.

5. Élément de liaison selon l'une des revendications précédentes, **caractérisé en ce que** le diamètre extérieur de la protubérance annulaire circonférentielle (10 ; 16 ; 18 ; 27) est légèrement inférieur au diamètre du socle de pied (8 ; 29).

6. Élément de liaison selon l'une des revendications précédentes, **caractérisé en ce qu**'une gorge circonférentielle (11, 17) est prévue dans une zone dans laquelle la section en forme de fût (3) est en continuité avec la section de pied (4).

7. Élément de liaison selon l'une des revendications précédentes, **caractérisé en ce que** la protubérance circonférentielle (10 ; 16 ; 27) est en continuité avec les sections avoisinantes par le biais de zones de forme essentiellement concave (9, 11 ; 17 ; 18).

8. Élément de liaison selon l'une des revendications précédentes, **caractérisé en ce qu**'un creux circonférentiel (9 ; 28) est réalisé dans la section de pied (4) entre le socle de pied (4 ; 29) et la protubérance circonférentielle (10 ; 16 ; 18 ; 27).

9. Élément de liaison selon l'une des revendications précédentes, **caractérisé en ce que** la section de tête (2) est munie à son extrémité libre d'un socle de tête (13) ayant une forme générale cylindrique ou s'approchant au moins de la forme d'un cylindre.

10. Élément de liaison selon l'une des revendications précédentes, **caractérisé en ce qu**'une zone concave (12 ; 15 ; 26) est réalisée dans la section de tête (2) entre le socle de tête (13) et la section en forme de fût (3).

11. Élément de liaison selon l'une des revendications précédentes, **caractérisé en ce qu**'une zone conique est réalisée dans la section de tête entre le socle de tête et la section en forme de fût.

12. Élément de liaison selon l'une des revendications précédentes, **caractérisé en ce que** la forme de l'élément de liaison ne présente pas une symétrie de rotation.

13. Élément de liaison selon l'une des revendications précédentes, **caractérisé en ce que** la section transversale de l'élément de liaison a une forme polygonale.

14. Élément de liaison selon l'une des revendications précédentes, **caractérisé en ce que** la forme de la section transversale partant d'une section transversale circulaire dans la zone d'une arête de coupe à l'extrémité libre du socle de pied se modifie en une forme de section transversale polygonale le long d'un axe longitudinal de l'élément de liaison.

15. Élément de liaison selon l'une des revendications précédentes, **caractérisé en ce que** la tête de rivet présente une zone fonctionnelle supplémentaire, telle que par exemple une cheville ou un filetage, laquelle peut dépasser, dans une liaison d'au moins une partie d'élément de construction réalisée au moyen d'un rivetage poinçonnant, au-dessus de la face supérieure d'une section d'élément de construction supérieur.

16. Procédé pour fabriquer un élément de liaison selon les revendications précédentes, **caractérisé en ce que** l'élément de liaison est fabriqué par un procédé de formage de pièce massive à partir d'une ébauche de matière (20), l'ébauche de matière (20) étant montée dans un outil ayant plusieurs segments (21) enveloppant latéralement l'ébauche de matière (20) et étant mise en forme durant un procédé de façonnage par refoulement.
